# EUROPÄISCHE PATENTANMELDUNG

(11) **EP 1 457 383 A1**
(43) Veröffentlichungstag der Anmeldung: **15.09.2004**
(21) Anmeldenummer: 04004615.3
(22) Anmeldetag: 28.02.2004
(51) Int. Cl.: B60Q 1/06, B60Q 1/08, G01C 21/00, G01C 21/20, F21V 14/00, B60Q 1/14

(54) **Kraftfahrzeug mit mindestens einem für Rechts- und Linksverkehr automatisch anpassbaren Scheinwerfer**

(30) Priorität: 08.03.2003 DE 10310232
(71) Anmelder: ADAM OPEL AG, 65423 Rüsselsheim (DE)
(72) Erfinder: Diehl, Peter G., 65421 Gross-Gerau (DE); Schneiker, Peter, 65428 Rüsselsheim (DE); Schreiber, Günther, 64354 Reinheim (DE)

(57) **Zusammenfassung**

Ein Kraftfahrzeug umfasst mindestens einen für eine Verkehrsart, nämlich Rechtsverkehr oder Linksverkehr, ausgelegten Scheinwerfer (1), der ein asymmetrisches Abblendlichtbündel ausstrahlt, das auf der eigenen Verkehrsseite eine größere Reichweite als auf der Gegenverkehrsseite aufweist, wobei ein Scheinwerferbauteil (4) mittels von einem Steuergerät (10) beaufschlagter Stellelemente (7) zur zumindest horizontalen Regulierung des Abblendlichtbündels vorgesehen ist. Das Steuergerät (10) ist derart mit einem Navigationssystem (12) gekoppelt, dass es bei einem mit einem Wechsel in die jeweils andere Verkehrsart verbundenen Überschreiten einer Staatsgrenze die Reichweite des Abblendlichtbündels zur Vermeidung einer Blendung des Gegenverkehrs selbsttätig anpasst.

## Beschreibung

Die Erfindung bezieht sich auf ein Kraftfahrzeug mit mindestens einem für eine Verkehrsart, nämlich Rechtsverkehr oder Linksverkehr, ausgelegten Scheinwerfer, der ein asymmetrisches Abblendlichtbündel ausstrahlt, das auf der eigenen Verkehrsseite eine größere Reichweite als auf der Gegenverkehrsseite aufweist, wobei ein Scheinwerferbauteil mittels von einem Steuergerät beaufschlagter Stellelemente zur zumindest horizontalen Regulierung des Abblendlichtbündels vorgesehen ist.

Die DE 100 44 391 A1 offenbart einen Scheinwerfer für ein Kraftfahrzeug, der für eine Verkehrsart Rechtsverkehr oder Linksverkehr ausgelegt ist und durch den ein Abblendlichtbündel ausgesandt wird, das eine asymmetrische obere Hell-Dunkel-Grenze aufweist. Hierdurch besitzt das Abblendlichtbündel auf der eigenen Verkehrsseite eine größere Reichweite als auf der Gegenverkehrsseite. Zur Veränderung der Leuchtweite des vom Scheinwerfer ausgesandten Abblendlichtbündels ist eine Leuchtweiteverstelleinrichtung vorgesehen. Beim Wechsel in die andere Verkehrsart, als die für die der Scheinwerfer ausgelegt ist, wird die Leuchtweite des vom Scheinwerfer ausgesandten Abblendlichtbündels mittels der Leuchtweiteverstelleinrichtung derart verringert, dass dessen Reichweite auf der Gegenverkehrsseite der anderen Verkehrsart soweit reduziert ist, dass dieses keine Blendung des Gegenverkehrs verursacht.

Im Weiteren ist aus der DE 199 39 026 A1 ein Automobilscheinwerfer bekannt, der einen Reflektor und eine darin angebrachte Lampe umfasst. Der Reflektor besitzt eine reflektierende Oberfläche, die wahlweise zwei Arten von Abblendlichtbündeln erzeugen kann, nämlich eines für Linksverkehr und eines für Rechtsverkehr, indem sie mit einer Lampe zusammenwirkt, die in entsprechender Art und Weise eine von zwei vorgegebenen Winkelstellungen einnimmt. Der Reflektor trägt eine Platte, die bezüglich dieses Reflektors drehbar ist und auf der die Lampe festgelegt ist. Darüber hinaus sind Mitführmittel vorhanden, um die Platte von Hand bis in die eine oder andere der beiden Betriebsstellungen zu drehen, wobei jede Betriebsstellung einer gegebenen Winkelstellung der Lampe entspricht. Zwischen der durch die Platte und die Lampe gebildeten Einheit und einem festen Teil des Scheinwerfers sind Mittel vorgesehen, um eine stabile Lage der Platte in jeder ihrer Betriebsstellungen zu gewährleisten.

Ferner beschreibt die EP 1 033 528 A2 einen Scheinwerfer für ein Kraftfahrzeug mit einem zwei Brennorte aufweisenden Reflektor und mit einer zwischen einer Linse und dem Reflektor angeordneten Blendenwelle, die um eine horizontale und quer zur optischen Achse verlaufenden Drehachse in mehrere Drehstellungen verstellbar ist und deren Mantelfläche für jede Drehstellung eine Brennlinie aufweist, die eine Hell-Dunkel-Grenze einer Lichtfigur erzeugt. Die Blendenwelle weist eine erste und eine zweite Gruppe von benachbart zueinander verlaufenden Brennlinien auf, wobei die Brennlinien der ersten Gruppe Lichtfiguren für den Rechtsverkehr und die Brennlinien der zweiten Gruppe Lichtfiguren für Linksverkehr erzeugen. Die äußeren Brennlinien der Gruppen erzeugen die größte und kleinste Lichtfigur der jeweiligen Gruppe.

Darüber hinaus ist aus der Praxis ein Scheinwerfer bekannt, der ein schwenkbares Scheinwerferbauteil umfasst und dessen Abblendlichtbündel beispielsweise während einer Kurvenfahrt rechnergesteuert an die jeweilige Fahrtrichtung des Kraftfahrzeuges oder dessen Leuchtweite in Abhängigkeit zur Lage des Kraftfahrzeuges auf der Straße angepasst wird, um eine optimierte Ausleuchtung der Straße zu gewährleisten. Hierzu steht das Scheinwerferbauteil mit Stellelementen in Verbindung, die wiederum mit einem Steuergerät gekoppelt sind und mittels denen die Schwenkbewegung des Scheinwerferbauteils bewerkstelligt wird.

Die Einstellung der zuvor erläuterten Scheinwerfer bzw. Abblendlichtbündel an die jeweilige Verkehrsart erfolgt stets durch eine von einem Benutzer des Kraftfahrzeuges vorgenommene Manipulation an elektrischen oder mechanischen Bauteilen.

Ferner ist als Navigationssystem für ein Kraftfahrzeug das GPS bekannt, bei dem ein kraftfahrzeugseitiger Empfänger Satellitendaten zur Positionsbestimmung des Kraftfahrzeuges empfängt und mit Kartendaten, die auch Staatsgrenzen umfassen, abgleicht.

Es ist Aufgabe der Erfindung, ein Kraftfahrzeug der eingangs genannten Art zu schaffen, bei dem eine Umschaltung der Lichtverteilung des Abblendlichtbündels des Scheinwerfers bei einem Wechsel von Rechtsverkehr auf Linksverkehr oder umgekehrt mit einfachen Mitteln zu bewerkstelligen ist.

Erfindungsgemäß wird die Aufgabe dadurch gelöst, dass das Steuergerät derart mit einem Navigationssystem gekoppelt ist, dass es bei einem mit einem Wechsel in die jeweils andere Verkehrsart verbundenen Überschreiten einer Staatsgrenze die Reichweite des Abblendlichtbündels zur Vermeidung einer Blendung des Gegenverkehrs selbsttätig anpasst.

Durch das Navigationssystem (GPS) erhält das Steuergerät ein Signal bezüglich des Überschreitens einer Staatsgrenze. Des Weiteren wird das Steuergerät entweder von dem Navigationssystem oder einem weiteren elektronischen Bauteil mit einer Information zu der in dem betreffenden Staat geltenden Verkehrsart versorgt, woraufhin das Steuergerät die z.B. als linear verstellbare Aktuatoren ausgebildeten Stellelemente anspricht, um das Scheinwerferbauteil in eine im Steuergerät für die jeweilige Verkehrsart gespeicherte Position zu verschwenken, in der das Abblendlichtbündel eine Reichweite aufweist, in der es keine Blendung des Gegenverkehrs bewirkt. Die Umschaltung der Lichtverteilung des Abblendlichtbündels ist mit verhältnismäßig einfachen Mitteln realisiert, die in vielen Kraftfahrzeugen ohnehin vorhanden sind. Darüber hinaus ist eine relativ große Sicherheit für den Gegenverkehr aufgrund der ausgeschlossenen Blendwirkung gewährleistet und ein hoher Komfort für den Benutzer des Kraftfahrzeuges sichergestellt, da die Einstellung des Scheinwerfers bzw. seines Abblendlichtbündels ohne menschliches Zutun erfolgt.

Zur Realisierung einer kostengünstigen Lösung sind zweckmäßigerweise das Steuergerät und das Navigationssystem über ein Fahrzeug-Bussystem verbunden.

Bevorzugt sind dem Navigationssystem Informationen bezüglich der Verkehrsarten unterschiedlicher Staaten zugeordnet. Diese Informationen können in einer Datenbank des Navigationssystems gespeichert sein, die durch das Laden neuer Software, beispielsweise neuer Karten-Daten, aktualisiert wird, womit auch Änderungen von Staatsgrenzen oder nationaler Verkehrsvorschriften berücksichtigt werden.

Nach einer vorteilhaften Weiterbildung des Erfindungsgedankens verschwenken die Stellelemente das Scheinwerferbauteil zur Anpassung der blendfreien Reichweite des Abblendlichtbündels horizontal und vertikal. Somit wird die Hell-Dunkel-Grenze des durch das Abblendlichtbündel beleuchteten Bereichs bidirektional, also in zwei Achsen, verschoben, um eine unerwünschte Blendung des Gegenverkehrs auszuschließen.

Bei einem relativ einfach aufgebauten Scheinwerfer ist vorteilhafterweise das Scheinwerferbauteil ein Reflektor des Scheinwerfers. Durch das Verschwenken des Reflektors ist eine Regulierung der Reichweite des Abblendlichtbündels zur Vermeidung einer Blendung des Gegenverkehrs sichergestellt.

Vorzugsweise ist das Scheinwerferbauteil ein an einem Aufnahmeteil gehaltertes und um eine vertikale Achse sowie eine horizontale Achse verschwenkbares Lichtmodul. Hierbei wird nicht nur der Reflektor sondern auch eine Lampe des Scheinwerfers verschwenkt.

Um ein Verschwenken des Lichtmoduls bei einem kompakten Aufbau des Scheinwerfers zu erzielen, ist bevorzugt jedes der Stellelemente einerseits über ein Gelenk an dem Reflektor oder dem Lichtmodul und andererseits über ein Gelenk an demselben Aufnahmeteil für den Reflektor oder das Lichtmodul befestigt.

Nach einer alternativen Ausgestaltung der Erfindung ist das Scheinwerferbauteil als eine Blende für das Abblendlichtbündel ausgebildet. Die Blende wird derart in dem Projektionsweg des Abblendlichtbündels mittels der Stellelemente verschoben, dass die Lichtverteilung des Abblendlichtbündels an Rechtsverkehr oder Linksverkehr angepasst ist.

Zur Vermeidung zusätzlicher Installationsleitungen sind zweckmäßigerweise die Stellelemente über das Fahrzeug-Bussystem mit dem Steuergerät gekoppelt. Vorteilhafterweise ist das Steuergerät Bestandteil einer automatischen Scheinwerfer-Regeleinrichtung. Eine solche Regeleinrichtung wird beispielsweise beim so genannten adaptive forward lightning (AFL) eingesetzt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:
- Fig. 1: eine Blockschaltbild für ein erfindungsgemäßes Kraftfahrzeug und
- Fig. 2: eine Darstellung eines vor einem Scheinwerfer des Kraftfahrzeuges angeordneten Messschirms.

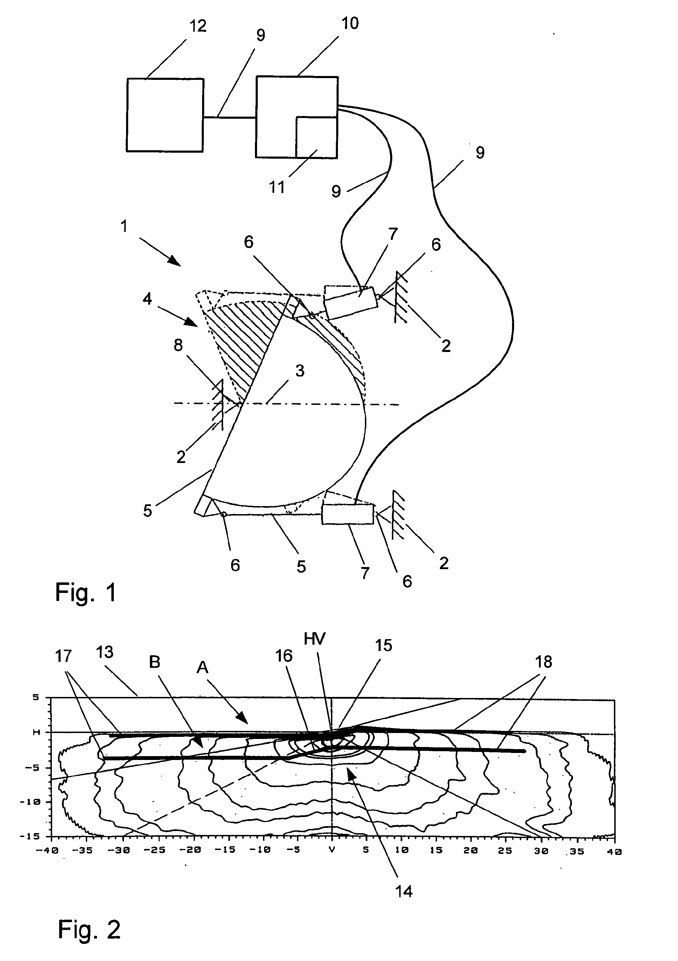

Das Kraftfahrzeug umfasst Scheinwerfer 1, die für eine Verkehrsart, nämlich Rechtsverkehr oder Linksverkehr, ausgelegt sind, wozu sie jeweils ein asymmetrisches Abblendlichtbündel ausstrahlen, das auf der eigenen Verkehrsseite eine größere Reichweite als auf der Gegenverkehrsseite aufweist. Der Scheinwerfer 1 nach Fig. 1 umfasst ein an einem Aufnahmeteil 2 um eine horizontale Achse 3 und eine vertikale Achse schwenkbar gelagertes Scheinwerferbauteil 4, nämlich ein Lichtmodul 5, wobei das schematisch dargestellte Aufnahmeteil 2 als ein topfförmiges Scheinwerfergehäuse mit einer lichtdurchlässigen Abschlussscheibe ausgebildet ist. Das Lichtmodul 5 steht über Gelenke 6 mit Stellelementen 7 in Verbindung, wobei zwischen jedem der Stellelemente 7 und einer jeweils benachbarten Anbindungsstelle des Aufnahmeteils 2 ein Gelenk 6 angeordnet ist.

Mittig zwischen den beiden Gelenken 6 der Anbindungsstellen hindurch verläuft die vertikale Achse zwischen dem vorderen Randbereich des Lichtmoduls 5 und einer Lagerstelle 8. Bei einer synchronen Bewegung der Stellelemente 5 in der einen Richtung schwenkt das Lichtmodul 5 um die durch die Lagerstelle 8 verlaufende horizontale Achse 3 und bei einem synchronen Bewegen der Stellelemente 7 in der anderen Richtung verschwenkt das Lichtmodul 5 um die durch die Lagerstelle 8 verlaufende vertikale Achse.

Die Stellelemente 7 stehen über ein Fahrzeug-Bussystem 9 mit einem Steuergerät 10 in Verbindung, das einen nicht flüchtigen Speicher 11 zum überschreibbaren Einspeichern von Einstellungen des Lichtmoduls 3 definierenden Einstellwerten umfasst. In seiner Grundeinstellung ist das Lichtmodul 5 für die Verkehrsart Rechtsverkehr justiert, wobei in den Speicher ein weiterer Einstellwert für die Verkehrsart Linksverkehr eingeschrieben ist. Zur Bestimmung der jeweils geltenden Verkehrsart ist das Steuergerät 10 über das Fahrzeug-Bussystem 9 mit einem Navigationssystem 12 des Kraftfahrzeuges verbunden, das Positionsdaten des Kraftfahrzeuges ermittelt und das diese Positionsdaten mit gespeicherten Karten-Daten abgleicht, wobei dem Navigationssystem 12 Informationen bezüglich der in unterschiedlichen Staaten geltenden Verkehrsart vorliegen, und das Navigationssystem 12 dem Steuergerät 10 eine Information hinsichtlich der Verkehrsart des Staates, in dem sich das Kraftfahrzeug befindet, über das Fahrzeug-Bussystem 9 sendet. Beim Überschreiten einer Staatsgrenze und einem damit verbundenen Wechsel der Verkehrsart auf Linksverkehr erhält das Steuergerät 10 eine diesbezügliche Information von dem Navigationssystem 12, worauf das Steuergerät 10 den Einstellwert des Lichtmoduls 3 für die Verkehrsart Linksverkehr aus seinem Speicher 11 abruft. Hierauf wird das Lichtmodul 5 mittels der Stellelemente 7 derart bidirektional verschwenkt, dass es die Lage entsprechend dem abgerufenen Einstellwert einnimmt und die Reichweite eines vom Scheinwerfer 1 erzeugten Abblendlichtbündels derart bemessen ist, dass dieses keine Blendung des Gegenverkehrs verursacht. Nach dem erneuten Überschreiten einer Staatsgrenze und einem damit verbundenen Wechsel der Verkehrsart auf Rechtsverkehr erhält das Steuergerät 10 wiederum eine diesbezügliche Information von dem Navigationssystem 12 und liest den Einstellwert des Lichtmoduls 3 für die Verkehrsart Rechtsverkehr aus seinem Speicher 11.

Fig. 2 zeigt einen Messschirm 13, der beabstandet vor dem Scheinwerfer 1 angeordnet ist und der durch ein vom Scheinwerfer 1 ausgesandtes Abblendlichtbündel beleuchtet wird. Der Messschirm 13 repräsentiert eine Projektion einer vor dem Scheinwerfer 1 liegenden Fahrbahn mit entsprechender Ausleuchtung. Eine horizontale Mittelebene H und eine vertikale Mittelebene V mit einem gemeinsamen Schnittpunkt HV sind auf dem Messschirm 13 dargestellt. Im Weiteren ist ein den Beleuchtungsbereich 14 des Scheinwerfers 1 begrenzender Kurvenverlauf A mit einer Hell-Dunkel-Grenze 15 des für die Verkehrsart Rechtsverkehr eingestellten Scheinwerfers 1 erkennbar. Bei einem Wechsel der Verkehrsart wird der Scheinwerfer 1 nach entsprechender Information seitens des Navigationssystems 12 durch eine entsprechende an die Stellelemente 7 gerichtete Signalgebung des Steuergerätes 10 auf die Verkehrsart Linksverkehr umgestellt, wobei das Lichtmodul 5 mittels der ihm zugeordneten Stellelemente 7 bidirektional verschwenkt wird. Hiernach ergibt sich der auf dem Messschirm 13 erkennbare Kurvenverlauf B mit der gegenüber dem Kurvenverlauf A verschobenen Hell-Dunkel-Grenze 16.

Beide Hell-Dunkel-Grenzen 15, 16 weisen einen ansteigenden Verlauf auf, der von einer linken Horizontalen 17 ausgeht und in eine rechte Horizontale 18 mündet. Hierbei entspricht der links von der vertikalen Mittelebene V dargestellte Bereich die Gegenverkehrsseite bei der Verkehrsart Rechtsverkehr und der Bereich auf der rechten Seite des Messschirms 13 der eigenen Verkehrsseite.

### Bezugszeichenliste

- 1.: Scheinwerfer
- 2.: Aufnahmeteil
- 3.: horizontale Achse
- 4.: Scheinwerferbauteil
- 5.: Lichtmodul
- 6.: Gelenk
- 7.: Stellelement
- 8.: Lagerstelle
- 9.: Bus-System
- 10.: Steuergerät
- 11.: Speicher
- 12.: Navigationssystem
- 13.: Messschirm
- 14.: Beleuchtungsbereich
- 15.: Hell-Dunkel-Grenze
- 16.: Hell-Dunkel-Grenze
- 17.: Horizontale
- 18.: Horizontale

- A: Kurvenverlauf
- B: Kurvenverlauf
- H: horizontale Mittelebene
- V: vertikale Mittelebene
- HV: Schnittpunkt

## Patentansprüche

1. Kraftfahrzeug mit mindestens einem für eine Verkehrsart, nämlich Rechtsverkehr oder Linksverkehr, ausgelegten Scheinwerfer (1), der ein asymmetrisches Abblendlichtbündel ausstrahlt, das auf der eigenen Verkehrsseite eine größere Reichweite als auf der Gegenverkehrsseite aufweist, wobei ein Scheinwerferbauteil (4) mittels von einem Steuergerät (10) beaufschlagter Stellelemente (7) zur zumindest horizontalen Regulierung des Abblendlichtbündels vorgesehen ist, **dadurch gekennzeichnet, dass** das Steuergerät (10) derart mit einem Navigationssystem (12) gekoppelt ist, dass es bei einem mit einem Wechsel in die jeweils andere Verkehrsart verbundenen Überschreiten einer Staatsgrenze die Reichweite des Abblendlichtbündels zur Vermeidung einer Blendung des Gegenverkehrs selbsttätig anpasst.

2. Kraftfahrzeug nach Anspruch 1, **dadurch gekennzeichnet, dass** das Steuergerät (10) und das Navigationssystem (12) über ein Fahrzeug-Bussystem (9) verbunden sind.

3. Kraftfahrzeug nach Anspruch 1 oder 2, **dadurch gekennzeichnet, dass** dem Navigationssystem (12) Informationen bezüglich der Verkehrsarten unterschiedlicher Staaten zugeordnet sind.

4. Kraftfahrzeug nach einem der Ansprüche 1 bis 3, **dadurch gekennzeichnet, dass** die Stellelemente (7) das Scheinwerferbauteil (4) zur Anpassung der blendfreien Reichweite des Abblendlichtbündels horizontal und vertikal verschwenken.

5. Kraftfahrzeug nach einem der Ansprüche 1 bis 4, **dadurch gekennzeichnet, dass** das Scheinwerferbauteil (4) ein Reflektor des Scheinwerfers (1) ist.

6. Kraftfahrzeug nach einem der Ansprüche 1 bis 4, **dadurch gekennzeichnet, dass** das Scheinwerferbauteil (4) ein an einem Aufnahmeteil (2) gehaltertes und um eine vertikale Achse sowie eine horizontale Achse (3) verschwenkbares Lichtmodul (5) ist.

7. Kraftfahrzeug nach einem der Ansprüche 1 bis 6, **dadurch gekennzeichnet, dass** jedes der Stellelemente (7) einerseits über ein Gelenk (6) an dem Reflektor oder dem Lichtmodul (5) und andererseits über ein Gelenk (6) an demselben Aufnahmeteil (2) für den Reflektor oder das Lichtmodul (5) befestigt ist.

8. Kraftfahrzeug nach einem der Ansprüche 1 bis 3, **dadurch gekennzeichnet, dass** das Scheinwerferbauteil (4) als eine Blende für das Abblendlichtbündel ausgebildet ist.

9. Kraftfahrzeug nach einem der Ansprüche 1 bis 8, **dadurch gekennzeichnet, dass** die Stellelemente (7) über das Fahrzeug-Bussystem (9) mit dem Steuergerät (10) gekoppelt sind.

10. Scheinwerfer nach einem der Ansprüche 1 bis 9, **dadurch gekennzeichnet, dass** das Steuergerät (10) Bestandteil einer automatischen Scheinwerfer-Regeleinrichtung ist.
